# EUROPÄISCHE PATENTANMELDUNG

(11) **EP 2 530 503 A1**
(43) Veröffentlichungstag der Anmeldung: **05.12.2012**
(21) Anmeldenummer: 12168849.3
(22) Anmeldetag: 22.05.2012
(51) Int. Cl.: G02B 6/00, F21V 8/00

(54) **Beleuchtungseinrichtung**

(30) Priorität: 01.06.2011 AT 8232011
(71) Anmelder: Zizala Lichtsysteme GmbH, 3250 Wieselburg (AT)
(72) Erfinder: Bauer, Friedrich, 3252 Bergland (AT); Mejta, Peter, 3251 Purgstall (AT); Muckenhuber, Markus, 3250 Wieselburg (AT); Bauer, Günther, 3372 Blindenmarkt (AT)
(74) Vertreter: Patentanwaltskanzlei Matschnig & Forsthuber OG

(57) **Zusammenfassung**

Eine Beleuchtungseinrichtung (1) mit einem stabförmigen Lichtleiter (2) und zumindest einer Lichtquelle (3) zur Lichteinspeisung in den Lichtleiter, der einen, sich in seiner Längsrichtung erstreckenden Streifen (4) mit einer Licht brechenden/zerstreuenden Strukturierung (4s) zur Erzeugung einer Hauptlichtverteilung im Sinne einer für einen Betrachter durch die Krümmung des Lichtleiterquerschnitts vergrößerten Abbildung der Strukturierung aufweist, wobei versetzt zu der Hauptlichtachse (a) zumindest ein von dem Lichtleiter (2) abstehender Steg (6) vorgesehen ist, der an seinem von dem Lichtleiter abgewandten Ende mit einer Zusatzstrukturierung (6s) versehen ist, welche für einen Betrachter abseits der Hauptlichtverteilung eine zusätzliche Ausleuchtung ergibt, wobei der Steg (6) nach hinten, parallel zur Hauptlichtachse (a) von dem Lichtleiter (2) absteht.

## Beschreibung

Die Erfindung bezieht sich auf eine Beleuchtungseinrichtung mit einem stabförmigen Lichtleiter und zumindest einer Lichtquelle zur Lichteinspeisung in den Lichtleiter, der einen, sich in seiner Längsrichtung erstreckenden Streifen mit einer Licht brechenden/zerstreuenden Strukturierung zur Erzeugung einer Hauptlichtverteilung im Sinne einer für einen Betrachter durch die Krümmung des Lichtleiterquerschnitts vergrößerten Abbildung der Strukturierung aufweist, wobei versetzt zu der Hauptlichtachse zumindest ein von dem Lichtleiter abstehender Steg vorgesehen ist, der an seinem von dem Lichtleiter abgewandten Ende mit einer Zusatzstrukturierung versehen ist, welche für einen Betrachter abseits der Hauptlichtverteilung eine zusätzliche Ausleuchtung ergibt.

Beleuchtungseinrichtungen dieser Art werden vielfach vor allem bei Kraftfahrzeugen verwendet, beispielsweise als Positionslichter, Fahrtrichtungsanzeiger, Innenleuchten, Konturbeleuchtungen, Heckleuchten und dgl. mehr, wobei als Lichtquellen meist LEDs dienen. Die stabförmigen Lichtleiter können dabei gerade oder gekrümmt und/oder auch verwunden sein.

Eine derartige Beleuchtungseinrichtung ist aus der DE 10055561A1 bekannt geworden, die über zwei zueinander räumlich versetzte optische Störstellenbereiche verfügt, wobei ein optischer Störstellenbereich an einem im Wesentlichen radial abgesetzten Steg angebracht ist. Die Anordnung dient dem Abstrahlen von wenigstens zwei getrennten, in unterschiedlichen Richtungen weisenden Lichtbündeln.

Des Weiteren zeigt die DE 102007023076A1 eine Beleuchtungseinrichtung, die über mindestens einen nicht symmetrisch angeordneten Lichtumlenkbereich verfügt.

Aus der US 2005/0286262 A1 ist eine Beleuchtungseinrichtung bekannt geworden, wobei in Längsnuten an der Hinterseite des Lichtleiters eine Diffusionszone vorgesehen ist, die dann durch den Vergrößerungseffekt der zylindrischen Oberfläche für den Betrachter entsprechend vergrößert erscheint.

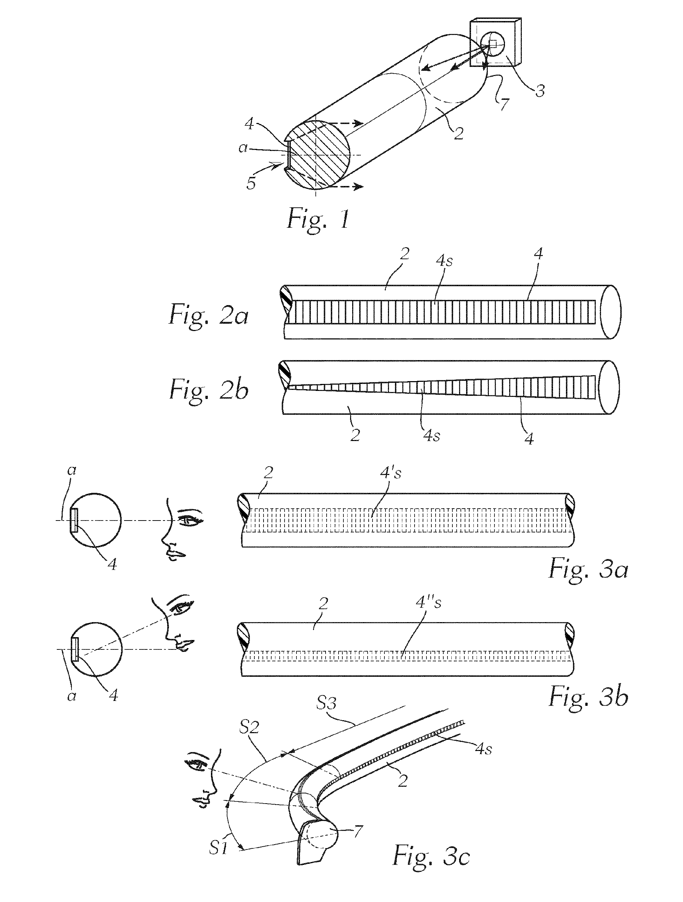

Dieses vergrößerte Abbild sieht der Betrachter jedoch nur, wenn er tatsächlich von vorne, d.h. im Wesentlichen in Richtung der Lichtachse auf die Beleuchtungseinrichtung blickt. Weiter von oben oder unten gesehen erscheint die abgebildete Struktur wesentlich schmäler oder bei gekrümmten oder gewundenen Lichtleitern völlig unregelmäßig, was weiter unten unter Bezugnahme auf die Fig. 1 bis 3 veranschaulicht wird.

Eine Aufgabe der Erfindung liegt in der Schaffung einer Beleuchtungseinrichtung, welche dem Betrachter auch unter verschiedenen Blickwinkeln ein homogeneres Erscheinungsbild liefert, ohne dass hierzu ein hoher optischer Aufwand, beispielsweise durch besondere an der Vorderseite des Lichtleiters aufgebrachte Strukturen bei erhöhten Verlusten der Lichtintensität und entsprechend gesteigerten Kosten erforderlich wäre.

Diese Aufgabe wird mit einer Beleuchtungseinrichtung der eingangs genannten Art gelöst, bei welcher erfindungsgemäß der Steg (6) nach hinten, parallel zur Hauptlichtachse (a) von dem Lichtleiter (2) absteht.

Dank der Erfindung ist die zusätzliche Strukturierung des Steges über einen viel größeren Bereich sichtbar als die Hauptstruktur, wodurch sich bei achsferner Betrachtung auch bei allmählichem Verschwinden der Hauptstrukturierung ein gleichmäßigeres Ausleuchtungsbild ergibt.

Es sei erwähnt, dass die Anordnung eines Steges an einem stabförmigen Lichtleiter aus der DE 10 2006 015 156 A1 bekannt ist, doch dient dort der Steg zur Auskoppelung von Licht an bestimmten Stellen, wobei zu diesem Zweck beispielsweise Einschnitte am Steg vorgesehen sind.

Im Sinne einer effizienten Lichtführung ist es vorteilhaft, wenn der Lichtleiter im Wesentlichen kreisförmigen/elliptischen Querschnitt aufweist.

Falls der Streifen mit Strukturierung für die Hauptlichtverteilung in einer Längsnut vorgesehen ist, liegt er gegen mechanische Einflüsse geschützt und die Herstellung einer Prismenstruktur kann leichter von sich ergehen.

Im Sinne einer wirkungsvollen Zerstreuung des Lichtes ist es vorteilhaft, wenn die Hauptstrukturierung und/oder die Zusatzstrukturierung prismenförmig ist.

Eine insgesamt kompakte und billigere Ausführung ergibt sich, falls der Steg ein Montagesteg für den Lichtleiter ist.

Auch hat es sich als praxisgerecht erwiesen, wenn die Dicke des Steges kleiner als der mittlere Durchmesser des Lichtleiters ist.

Die Erfindung samt weiteren Vorteilen ist im Folgenden an Hand einer beispielsweisen Ausführungsform beschrieben, die in der Zeichnung veranschaulicht ist. In dieser zeigen
Fig. 1 einen Querschnitt durch einen stabförmigen Lichtleiter nach dem Stand der Technik,
Fig. 2a und 2b zwei beispielhafte Strukturierungen für die Erzeugung einer Hauptlichtverteilung, gesehen von der Hinterseite des Lichtleiters,
Fig. 3a das Erscheinungsbild einer Strukturierung bei einem geraden Lichtleiter ohne Zusatzstrukturierung bei Ansicht von vorne nach dem Stand der Technik,
Fig. 3b das Erscheinungsbild einer Strukturierung bei einem geraden Lichtleiter ohne Zusatzstrukturierung bei Ansicht von oben nach dem Stand der Technik,
Fig. 3c das Erscheinungsbild einer Strukturierung bei einem gekrümmten Lichtleiter ohne Zusatzstrukturierung bei Ansicht von schräg oben nach dem Stand der Technik,
Fig. 4 in schaubildlicher Darstellung ein ausgeführtes Beispiel einer Beleuchtungseinrichtung nach der Erfindung,
Fig. 5a einen Querschnitt durch einen Lichtleiter einer Beleuchtungseinrichtung nach der Erfindung und Fig. 5b in einem Diagramm die zugehörige Lichtverteilung und
Fig. 6a einen beispielhaften Strahlengang durch den Steg eines gekrümmten Lichtleiters nach der Erfindung mit einer Lichtablenkung nach oben zu einem Betrachter und
Fig. 6b den Lichtleiter nach Fig. 6a in schaubildlicher Darstellung.

Die schematische Darstellung nach Fig. 1 zeigt eine Beleuchtungseinrichtung 1 nach dem Stand der Technik, die prinzipiell aus einem stabförmigen Lichtleiter 2 und einer Lichtquelle 3 zur Einspeisung von Licht in den Lichtleiter besteht. Im vorliegenden Fall wird das Licht beispielsweise in einer Leuchtdiode oder einem Diodenarray generiert und in eine Einkoppelstelle 7 des Lichtleiters 2 eingespeist, die im vorliegenden Fall eine plane Stirnfläche des Lichtleiters ist, aber auch eine andere Geometrie aufweisen kann, beispielsweise die einer konkav oder konvex geformten Fläche.

Der Querschnitt des Lichtleiters 2 ist im Wesentlichen kreisförmig oder auch elliptisch, wobei er jedenfalls zur Lichtführung in Längsrichtung geeignet sein muss. Der Lichtleiter 2 weist einen, sich in seiner Längsrichtung erstreckenden Streifen 4 auf, der von einer Licht brechenden/zerstreuenden Strukturierung 4s gebildet ist, welche zur Erzeugung einer Hauptlichtverteilung im Sinne einer für einen Betrachter durch die Krümmung des Lichtleiterquerschnitts vergrößerten Abbildung der Strukturierung dient. Die Strukturierung ist hier in einer Längsnut 5 vorgesehen und besteht beispielsweise aus einer Vielzahl von Mikroprismen, einer Aufrauung oder besitzt eine andere Licht zerstreuende Beschaffenheit der Oberfläche. Im vorliegenden Fall erkennt man die Rippen von Prismen, die von oben nach unten am Lichtleiter laufen und entlang der Längsrichtung desselben angeordnet sind. Die Rippen selbst sind im vorliegenden Fall nicht weiter strukturiert, was aber durchaus möglich wäre.

Es soll klar sein, dass für das Vorsehen des Streifens 4 mit der Struktur nicht die in diesem Beispiel gezeigte Längsnut 5 erforderlich ist. Alternativ zu der Nut kann z.B. eine quaderförmige Struktur hinten am Lichtleiter angeformt sein, welche Auskoppelprismen enthält.

Wie in Fig. 1 die strichlierten Linien mit den Pfeilen andeuten, erscheint einem Betrachter, der sich vor dem Lichtleiter befindet und in Richtung der Achse a, im Folgenden als Hauptlichtachse a bezeichnet blickt, ein vergrößertes Abbild der Strukturierung. Falls die Längsachse des Lichtleiters 2 in einer Ebene liegt, kann man auch von einer Hauptlichtebene sprechen, welche die Hauptlichtachse a enthält.

Es soll an dieser Stelle klar gestellt werden, dass die Begriffe *vorne, hinten, oben, unten* etc. in dieser Beschreibung als relative Angaben zu verstehen sind, die sich auf die Anordnung der Strukturierung 4s bezüglich des Lichtleiterquerschnitts beziehen, nicht jedoch die entsprechenden Topographie beispielsweise eines Kraftfahrzeuges. Insbesondere ist der Begriff *vorne* in Zusammenhang mit der Hauptabstrahlrichtung des Lichtleiters 2 auf Grund der Strukturierung 4s zu verstehen.

Die Breite des Streifens 4 kann dem jeweiligen Anwendungszweck entsprechend gewählt werden und sie kann sich in ihrem Verlauf auch beliebig ändern, damit unterschiedliche Lichtverteilungen längs des Lichtleiters 2 auftreten. Dies ist an Hand der Fig. 2a und 2b gezeigt, wobei Fig. 2a das einen strukturierten Streifen 4 konstanter Breite zeigt und Fig. 2b einen Streifen 4, dessen Breite in Längsrichtung abnimmt (in der Zeichnung von rechts nach links).

An Hand der Fig. 3a bis c wird nun erläutert, welchen Einfluss der Betrachtungswinkel bzw. die Elevation eines betrachtenden Auges bezüglich der Hauptlichtachse a hat. Dabei zeigt Fig. 3a das Erscheinungsbild 4's eines Streifens 4 bzw. seiner Strukturierung 4s bestimmter Breite bei Betrachtung genau von vorne, wogegen Fig. 3b das Erscheinungsbild 4"s desselben Streifens bei Betrachtung von vorne und oben, eben unter einem bestimmten Elevationswinkel zeigt. Man erkennt, dass in diesem Fall die optische Abbildung des Streifens erheblich schmäler ist. Analoges gilt natürlich auch bei Betrachtung von vorne und unten. Bei einem gekrümmten Lichtleiter 2 ergibt sich noch eine zusätzliche Inhomogenität der Lichtverteilung, wenn man, wie dargestellt, beispielsweise von schräg oben auf den Lichtleiter 2 blickt.

Der Blickwinkel von seitlich und schräg oben entspricht etwa jenem, unter dem man auf ein Blatt Papier blickt. Aus diesem Winkel sind an dem Lichtleiter drei unterschiedlichen Sektoren sichtbar, welche in Fig. 3c mit S1, S2 und S3 bezeichnet sind.

Der erste Sektor S1 (beginnend an der Einkoppelstelle 7) erstreckt sich bis zum Ende eines Dunkelbereiches. Darauf folgt der zweite Sektor S2 mit sich ändernder Helligkeit und der dritte Sektor S3 beginnt nach dem zweiten Sektor S2.

Wie man erkennt, ist im ersten Sektor S1 keine Strukturierung 4s mehr sichtbar, sodass dieser Bereich des Lichtleiters 2 daher dunkel erscheint. Im zweiten Sektor S2 laufen die sichtbaren Rippen der Strukturierung in Richtung des ersten Sektors S1 spitz zusammen. Dadurch erscheint der Lichtleiter 2 in Richtung des ersten Sektors S1 immer dunkler. Nur der dritte Sektor S3 erscheint gleichmäßig hell, da hier die Rippen ständig und in gleicher Größe sichtbar sind. Der Blickwinkel ist hier extrem gewählt, um die spezifische Problematik besser zu veranschaulichen.

Sind Lichtleiter der beschrieben bekannten Art beispielsweise an der Vorderseite eines Kraftfahrzeuges angeordnet, so führen die in Zusammenhang mit den in Fig. 3a bis c beschrieben Effekte dazu, dass die Leuchtstruktur bei achsferner Betrachtung, z.B. für einen seitlich von dem Fahrzeug oder knapp davor stehenden Betrachter, teilweise nicht mehr sichtbar sind. Die im Folgenden im Detail beschriebene Erfindung vermeidet eben diesen Nachteil.

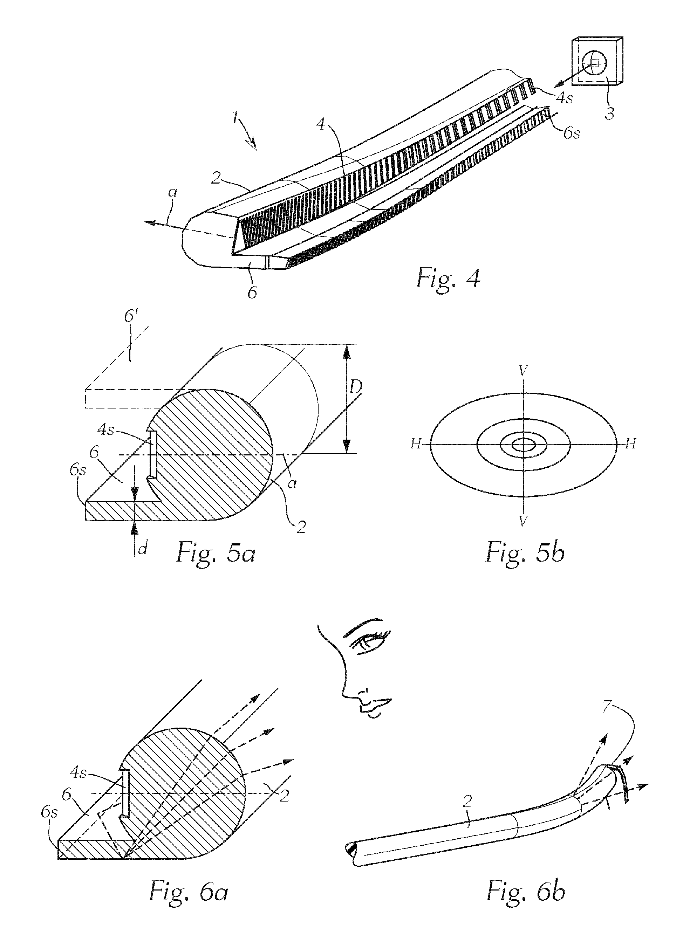

Wie Fig. 4 und Fig. 5a zeigen, ist bei einer Beleuchtungseinrichtung 1 im Sinne der Erfindung vorgesehen, dass versetzt zu der Hauptlichtachse a ein von dem Lichtleiter 2 abstehender Steg 6 vorgesehen ist, der an seinem von dem Lichtleiter abgewandten Ende mit einer Zusatzstrukturierung 6s versehen ist, welche für einen Betrachter abseits der durch die Strukturierung 4s des Streifens 4 erzeugten Hauptlichtverteilung eine zusätzliche Ausleuchtung ergibt.

In Fig. 5a ist die Dicke des Steges 6 mit d bezeichnet und der Durchmesser des Lichtleiters 2 mit D, wobei anzumerken ist, dass D im Allgemeinen einen mittleren Durchmesser bedeuten soll, da die Querschnittsform des stabförmigen Lichtleiters 2 nicht immer kreisförmig sein wird, wie beispielsweise die Ausführungsform nach Fig. 4 zeigt.

Bei dem gezeigten Beispiel besteht die Strukturierung 4s des Streifens 4 ebenso wie die Zusatzstrukturierung 6s am freien hinteren Ende des Steges 6 aus kleinen Prismen, wobei diese zu einem Ende des Lichtleiters 2 hin, zu dem die Lichtmenge immer mehr abnimmt, immer enger angeordnet sind, um eine homogene Ausleuchtung des Lichtleiters zu gewährleisten. Da die Zusatzstrukturierung 6s bezogen auf die abbildende Fläche des Lichtleiters 2 achsfern, hier nach unten versetzt, angebracht ist, erfolgt eine vertikal stark verzerrte Abbildung der Zusatzstrukturierung 6s durch weitere Abstrahlung von Reflexionen nach oben. Dies ist weiter unten in Fig. 6a gut ersichtlich. Die Zusatzstrukturierung 6s ist somit im Gegensatz zur (Haupt)strukturierung 4s über einen wesentlich größeren Bereich sichtbar, wobei das durch die (Haupt)strukturierung 4s ausgekoppelte Licht bei achsferner Betrachtung verschwindet.

Dieser Effekt ist in den folgenden Figuren dargestellt. In dem Isolux-Diagramm der Fig. 5b stellen die elliptischen Kurven die verschiedenen Lichtstärken der Hauptlichtverteilung welche durch die Prismierung 4s erzeugt wird, schematisch dar, wobei im Zentrum, in dem sich die Geraden V-V und H-H schneiden, die Lichtstärke am größten ist.

Fig. 6a zeigt in dem Schnitt durch einen Lichtleiter 2 bei der Erfindung einen beispielsweisen Strahlengang durch den Steg 6 und die Lichtablenkung nach oben zu dem Auge eines Beobachters. Eine entsprechende Darstellung an einem schaubildlich gezeigten Abschnitt eines Lichtleiters findet sich in Fig. 6b.

Der Steg 6 dient, wie oben beschrieben, zur Erzeugung einer zusätzlichen Ausleuchtung durch seine Zusatzstrukturierung 6s, doch ergibt sich als zweckmäßiger Nebeneffekt, dass der Steg 6 auch als Befestigungssteg für die Einrichtung dienen kann. In besonderen Fällen könnte auch mehr als ein Steg 6 vorgesehen sein, was in Fig. 5a durch einen zweiten, strichliert angedeuteten Steg 6' gezeigt ist. In anderen Fällen, beispielsweise bei Einsatz als Innenbeleuchtung am Dachhimmel, wird der Steg "oben" angeordnet sein, d.h. der Steg 6' vorhanden, der Steg 6 jedoch weggelassen sein. Wie ersichtlich ist die Dicke d des Steges 6 bei den bevorzugten Ausführungsformen merklich kleiner als der durchschnittliche Durchmesser D des Lichtleiters 2.

Mit Hilfe des nach hinten abstehenden Steges 6 kann der Lichtleiter 2 gehalten werden und es müssen keine Haltemittel an dem stabförmigen Lichtleiter selbst angeformt werden. Dadurch entstehen auch keine wesentlichen Lichtverluste. Werden nämlich Haltemittel am Lichtleiter angeformt, so tritt durch diese Licht an ungewünschten Stellen aus, da sich das Licht ja auch in den Haltemitteln ausbreitet.

Die Zusatzstrukturierung 6s weist zweckmäßigerweise - jedoch keinesfalls notwendigerweise - die gleiche Geometrie auf, wie die Hauptstrukturierung 4s, z.B. eine periodische Zacken- oder Rechteckstruktur, da hierdurch der angestrebte "Kaschierungseffekt" am besten verwirklicht wird und die Werkzeugkosten bei der Herstellung geringer sind, als bei unterschiedlicher Geometrie der beiden Strukturierungen.

Der Querschnitt des Lichtleiters 2 muss nicht notwendigerweise kreisförmig oder elliptisch sein, er soll nur so gestaltet sein, dass eine gute Lichtführung längs des Lichtleiters möglich ist, abgesehen von jenen Bereichen, in welchen der Steg 6 ansetzt bzw. eine Nut für die Hauptstrukturierung vorgesehen ist, denn dort ist die Querschnittsform aus bestimmten Gründen ohnedies nicht kreisförmig oder elliptisch. Allerdings führen Abweichungen vom Kreisquerschnitt, welche beispielsweise aus Gründen des Designs gewünscht sind, zu Wirkungsgradverlusten.

Was die Dicke des Steges betrifft, so hat diese unmittelbar Einfluss auf den Wirkungsgrad des Lichtleiters, da der Steg eine Störung des kreisrunden Querschnittes, welcher optimal für die Lichtleitung durch Totalreflexion ist, darstellt.. Zweckmäßigerweise wird man den Steg so schmal wie möglich, aber ohne den erwünschten kaschierende Effekt zu vermindern, ausführen.

## Patentansprüche

1. Beleuchtungseinrichtung (1) mit einem stabförmigen Lichtleiter (2) und zumindest einer Lichtquelle (3) zur Lichteinspeisung in den Lichtleiter, der einen, sich in seiner Längsrichtung erstreckenden Streifen (4) mit einer Licht brechenden/zerstreuenden Strukturierung (4s) zur Erzeugung einer Hauptlichtverteilung im Sinne einer für einen Betrachter durch die Krümmung des Lichtleiterquerschnitts vergrößerten Abbildung der Strukturierung aufweist, wobei versetzt zu der Hauptlichtachse (a) zumindest ein von dem Lichtleiter (2) abstehender Steg (6) vorgesehen ist, der an seinem von dem Lichtleiter abgewandten Ende mit einer Zusatzstrukturierung (6s) versehen ist, welche für einen Betrachter abseits der Hauptlichtverteilung eine zusätzliche Ausleuchtung ergibt,
**dadurch gekennzeichnet, dass**
der Steg (6) nach hinten, parallel zur Hauptlichtachse (a) von dem Lichtleiter (2) absteht.

2. Beleuchtungseinrichtung (1) nach Anspruch 1, **dadurch gekennzeichnet, dass** der Lichtleiter (2) im Wesentlichen kreisförmigen/elliptischen Querschnitt aufweist.

3. Beleuchtungseinrichtung (1) nach Anspruch 1 oder 2, **dadurch gekennzeichnet, dass** der Streifen (4) mit Strukturierung (4s) für die Hauptlichtverteilung in einer Längsnut (5) vorgesehen ist.

4. Beleuchtungseinrichtung (1) nach einem der Ansprüche 1 bis 3, **dadurch gekennzeichnet, dass** der Steg (6) im Wesentlichen tangential von dem Lichtleiter (2) absteht.

5. Beleuchtungseinrichtung (1) nach einem der Ansprüche 1 bis 4, **dadurch gekennzeichnet, dass** die Hauptstrukturierung (4s) und/oder die Zusatzstrukturierung (6s) prismenförmig ist.

6. Beleuchtungseinrichtung (1) nach einem der Ansprüche 1 bis 5, **dadurch gekennzeichnet, dass** der Steg (6) ein Montagesteg für den Lichtleiter (2) ist.

7. Beleuchtungseinrichtung (1) nach einem der Ansprüche 1 bis 6, **dadurch gekennzeichnet, dass** die Dicke (d) des Steges (6) kleiner als der mittlere Durchmesser (D) des Lichtleiters (2) ist.
